(19) **Europäisches Patentamt**
**European Patent Office**
**Office européen des brevets**

(11) Numéro de publication : **0 206 881 B1**

(12) **FASCICULE DE BREVET EUROPEEN**

(45) Date de publication du fascicule du brevet :
16.01.91 Bulletin 91/03

(51) Int. Cl.$^5$ : **H04N 9/09, H04N 9/64**

(21) Numéro de dépôt : **86401188.7**

(22) Date de dépôt : **03.06.86**

(54) **Dispositif de correction de contours dans une image et utilisation d'un tel dispositif dans une caméra de télévision couleur.**

(30) Priorité : 05.06.85 FR 8508532

(43) Date de publication de la demande :
30.12.86 Bulletin 86/52

(45) Mention de la délivrance du brevet :
16.01.91 Bulletin 91/03

(84) Etats contractants désignés :
**DE GB**

(56) Documents cités :
**EP-A- 0 011 674**
**FR-A- 1 527 219**
**FR-A- 2 086 101**
**GB-A- 2 126 828**
**US-A- 3 732 360**

(73) Titulaire : **THOMSON VIDEO EQUIPEMENT**
**94, rue du Fossé Blanc**
**F-92230 Gennevilliers (FR)**

(72) Inventeur : **Lacoste, Jean-Pierre**
**THOMSON-CSF SCPI 19, avenue de Messine**
**F-75008 Paris (FR)**
Inventeur : **Mourier, Christian**
**THOMSON-CSF SCPI 19, avenue de Messine**
**F-75008 Paris (FR)**
Inventeur : **Fleury, Xavier**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

# Description

L'invention se rapporte au domaine des caméras de télévision couleur, et plus particulièrement aux dispositifs de correction de contours nécessaires dans de telles caméras.

En effet, le pouvoir séparateur des tubes de prises de vues couleurs est limité par l'épaisseur du spectre d'analyse. Il en résulte une perte de résolution fonction de la fréquence, qui correspond à une atténuation des contours de l'image. Par ailleurs, la résolution dans le sens vertical est limitée par le nombre de lignes d'analyse.

Les dispositifs de correction de contours ont pour but de compenser ces dégradations qui se traduisent par une limitation des taux de modulation, en rehaussant l'aspect visuel de l'image sans en accentuer le bruit. Une correction de contours efficace est le résultat d'un compromis entre l'accentuation suffisante des transitions dans le sens vertical et dans le sens horizontal de l'image et une limitation du bruit, en particulier dans les plages de couleurs uniformes.

Plusieurs systèmes de correction ont été mis en oeuvre jusqu'à présent. Le premier système, performant et en même temps assez simple consiste à extraire le signal de contours, c'est-à-dire les détails des images, du signal de luminance. Cette méthode est appliquée dans les systèmes de codage actuels où la bande passante du canal de luminance est environ 4 fois supérieure à la bande passante des canaux de chrominance.

En effet, les premières caméras de télévision couleur étaient pourvues de quatre tubes fournissant respectivement les signaux de luminance Y et de chrominance, R, V, B. La correction de contours, à partir du signal de luminance, avait l'avantage de ne pas être affectée par les défauts de convergence des trois tubes couleurs, le taux de modulation suivant fidèlement la loi de luminance.

Dans les nouvelles caméras dont le système analyseur comporte trois tubes, le signal de luminance est élaboré à partir du canal vert, et les détails extraits à partir de ce canal sont inexistants pour une surface importante du triangle des couleurs comprenant toute la surface proche du rouge.

Le système de correction de contours classiques consiste à élaborer une image floue par un système de filtres, à partir de l'image initiale. Ce traitement est appliqué en général à la seule voie de luminance ou à la seule voie verte. Les différences entre l'image initiale et l'image filtrée sont calculées pour générer un signal de contours. Ce signal est alors débruité et mis en forme pour générer un signal de correction utile qui est appliqué simultanément :
– à l'image filtrée pour reconstituer l'image initiale mais débruitée,
– à l'image reconstituée pour accentuer les contours après le système de correction de gamma pour éviter de perturber ce dernier.

Ce signal de correction est appliqué à chacun des signaux constituant le signal vidéo. Un exemple de ce type de correction est décrit dans le brevet américain US-A-3 732 360. Les résultats obtenus avec un tel système sont assez satisfaisants mais sont cependant limités par deux inconvénients majeurs :
– les voies rouge et bleue non débruitées, corrigées par les signaux de contours extraits de la voie verte, augmentent le bruit sur le signal de luminance ;
– les couleurs rouge et bleue de certaines images à niveau de vert faible sont dépourvues de contours.

Pour éviter cet inconvénient il a été proposé par exemple dans la demande GB-A-2 126 828 d'extraire le signal de contours d'un signal de luminance constitué d'une combinaison de signaux. Les coefficients du matriçage, déterminés par l'expérience, peuvent être pour une combinaison de la voie rouge et de la voie verte : 0,3 pour la voie rouge et 0,7 pour la voie verte et le matriçage donne 0,3 R+0,7 V. Ainsi on obtient une correction de contours équilibrée, représentative de la luminance, dans laquelle une seule voie de traitement des contours est utilisée, le signal de contours résultant étant appliqué aux différentes voies. Un tel système a l'avantage d'être simple et économique mais présente un inconvénient : la correction dans le rouge ajoute du contour sur les détails noirs et blancs et du bruit sur la luminance. De plus toute déconvergence entre la voie verte et la voie rouge donne naissance à un dédoublement visible du contour. Enfin une telle solution ne permet pas de doser séparément le contour rouge et le contour vert.

Une autre solution a été proposée dans laquelle le signal de contours est élaboré à partir du maximum de deux signaux de couleurs, 0,3 R et V. Il s'obtient par différence entre les signaux provenant des deux matrices non additives traitant respectivement les signaux vidéo nets et les signaux vidéo filtrés, et extrayant le maximum des signaux 0,3 R et V, nets ou filtrés. Par principe ce système fait apparaître du contour rouge si 0,3 R est supérieur à V et du contour vert si V est supérieur à 0,3 R. Les coefficients ont été définis en fonction de cas représentatifs d'une image couleur, détail blanc sur fond noir ou détail noir sur fond blanc. Le coefficient 0,3 est le résultat d'un compromis entre une amplitude de contours suffisante et une limitation de la visibilité du contour rouge en cas de déconvergence entre les voies, et une limitation de la diminution du contour vert sur les transitions blanc-rouge. Ce système est également simple et économique comme le système décrit ci-dessus puisqu'il utilise une seule voie de traitement pour les contours rouge et vert mais, comme le système précédent aussi, il est impossible de doser séparément le contour R et le contour V. De plus ce système introduit une diminution notable de contours sur les transitions blanc-rouge.

L'invention a pour objet un système de correction de contours qui permet d'obtenir simultanément :
– une correction maximum sur les détails rouges seuls, à partir d'un traitement de contours particulier à la voie rouge,
– un minimum de correction dans le rouge pour les détails noirs et blancs dont les contours proviennent de la voie verte,
– un minimum de correction dans le rouge en cas de déconvergence entre les voies rouge et verte, pour éviter un dédoublement visible du contour.

Suivant l'invention, un dispositif de correction de contours des signaux de chrominance issus des tubes analyseurs d'une caméra de télévision couleur, comportant dans la voie verte un circuit d'extraction de signaux des contours caractéristiques des transitions dans le signal vert, un circuit de traitement de contours relié au circuit d'extraction, et deux additionneurs de sortie respectivement dans chacune des voies de chrominance, couplés d'une part aux entrées des voies de chrominance correspondantes et d'autre part à une sortie de signal de correction de contours finale du dispositif, est caractérisé en ce qu'il comporte en outre dans la voie rouge un circuit d'extraction de signaux de contours caractéristiques de transitions dans le signal de chrominance rouge, un circuit de validation recevant les signaux de chrominance vert et rouge et le signal de contour rouge $C_R$ et fournissant un signal de contour rouge validé lorsque le niveau du signal de chrominance rouge est nettement plus élevé que le niveau du signal de chrominance vert, et un circuit de traitement des contours relié à la sortie du circuit de validation, le dispositif de correction comportant en outre un circuit de mélange, relié aux sorties des deux circuits de traitement des contours fournissant le signal de correction de contours final aux additionneurs de sortie.

L'invention a également pour objet l'utilisation d'un tel dispositif de correction de contours dans une caméra de télévision couleur.

L'invention sera mieux comprise et d'autres caractéristiques apparaîtront à l'aide de la description qui suit en référence aux figures annexées, dans lesquelles :
– la figure 1 est le schéma synoptique du dispositif de correction de contours suivant l'invention;
– la figure 2 est un schéma explicatif ;
– les figures 3 et 4 sont des chronogrammes de signaux explicatifs du fonctionnement du dispositif de contours suivant l'invention.

Le dispositif de correction de contours suivant l'invention comporte dans la voie verte un circuit d'extraction de contours et un circuit de traitement de contours semblables à ceux utilisés dans les systèmes classiques. Mais, pour permettre un réglage séparé de la correction de contours, suivant que le niveau de vert est très supérieur au niveau de rouge ou inversement, un second circuit d'extraction de contours indépendant de celui disposé dans la voie verte est prévu dans la voie rouge. A ce circuit d'extraction de contours est associé un circuit de validation qui tient compte des niveaux respectifs de vert et de rouge dans l'image, pour valider le signal de contours issu de la voie rouge ou au contraire l'invalider. Le signal de contours issu de la voie rouge ainsi validé est alors traité de la même manière que le signal de contours issu de la voie verte, mais indépendamment de ce dernier. Les deux signaux de contours résultants sont combinés avant d'être appliqués ensemble aux trois voies de chrominance pour corriger chacune des composantes de chrominance en lui superposant la correction de contours ainsi obtenue.

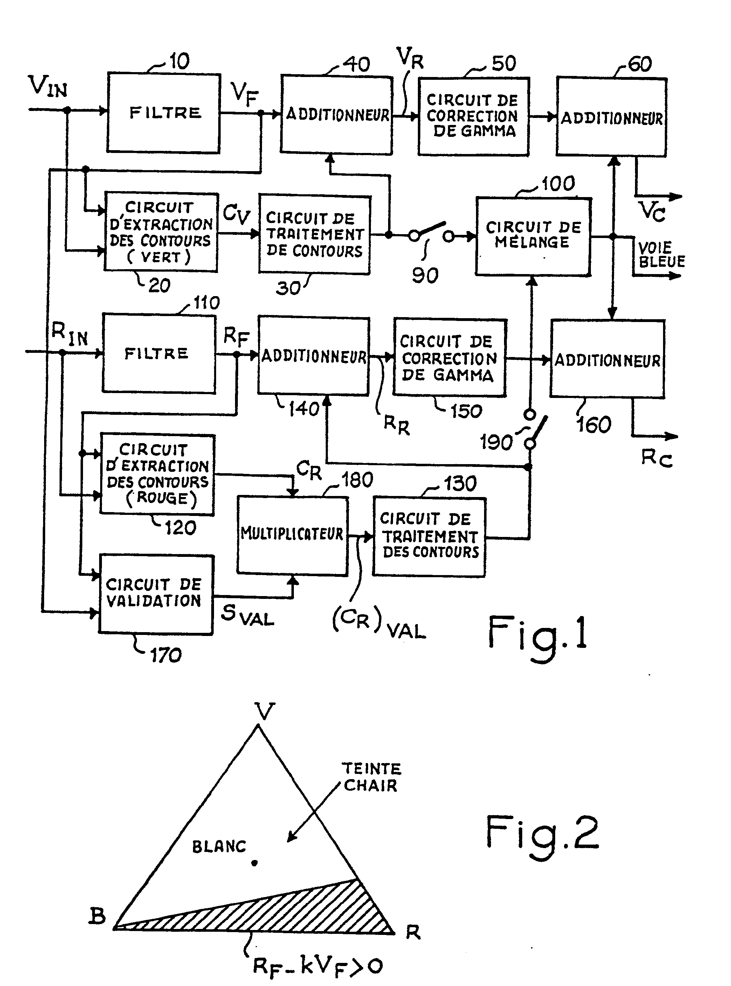

La figure 1 est le schéma synoptique du dispositif de correction de contours succinctement décrit ci-dessus. Le signal vidéo issu du tube vert, $V_{IN}$, est appliqué à l'entrée d'un filtre en peigne, 10, dont la sortie fournit un signal vidéo vert filtré, $V_F$, dans lequel les temps de transition sont allongés. Les signaux $V_{IN}$ et $V_F$ sont appliqués aux deux entrées d'un circuit d'extraction des contours verts, 20, qui par différence entre les signaux $V_{IN}$ et $V_F$ élabore le signal de contours vert $C_V$. Ce signal est appliqué à l'entrée d'un circuit de traitement de contours, 30, qui permet d'éliminer le bruit et d'ajuster le niveau et la phase de ce signal. Le signal de sortie du circuit de traitement 30 est appliqué à la seconde entrée d'un additionneur 40 dont la première entrée reçoit le signal vert filtré, $V_F$ pour reconstituer le signal vert, $V_R$ ; le signal de sortie du circuit 30 est également appliqué, à travers un interrupteur 90, à une première entrée d'un circuit de mélange, 100, dont la seconde entrée est reliée, par un interrupteur 190, à la sortie d'un circuit de traitement de contours 130. La sortie de l'additionneur 40 est reliée à l'entrée d'un circuit de correction de gamma, 50, dont la sortie est reliée à la première entrée de l'additionneur de sorties de la voie verte, 60, qui reçoit sur sa seconde entrée un signal de correction de contours, et fournit le signal vidéo vert corrigé $V_C$ .

De la même manière le signal vidéo issu du tube rouge, $R_{IN}$, est appliqué à un filtre 110 qui fournit le signal rouge filtré $R_F$. Ce signal rouge filtré $R_F$ et le signal rouge $R_{IN}$ sont appliqués à un circuit d'extraction de contours rouges, 120, qui génère le signal de contours rouge $C_R$ par différence entre les signaux $R_{IN}$ et $R_F$. Par ailleurs un circuit de validation 170 reçoit sur ses deux entrées les signaux vidéo filtré $R_F$ et $V_F$, et fournit un signal de validation $S_{VAL}$ appliqué à une entrée d'un multiplicateur 180 dont l'autre entrée reçoit le signal de contours rouge $C_R$. La sortie du circuit multiplicateur 180 est reliée à l'entrée du circuit de traitement de contours 130 analogue au circuit de traitement de contours 30 placé dans la voie verte. De plus, comme la voie verte, la voie rouge comporte un additionneur 140 qui reçoit sur sa première entrée le signal rouge filtré $R_F$, et sur sa seconde entrée le signal de contours rouge après traitement ; cet additionneur fournit le signal rouge reconstitué $R_R$. La sortie de l'additionneur 140 est reliée à l'entrée d'un circuit de correction de gamma 150 dont la sortie est reliée à la première entrée d'un additionneur de sortie de la voie rouge 160 ; la seconde entrée de l'additionneur 160 reçoit le signal de correction de contours final, fourni par le circuit de mélange 100, et fournit le signal rouge corrigé $R_C$. Le signal de correction de contours appliqué à la seconde entrée de l'additionneur 60, à la seconde entrée de l'additionneur 160, et également appliqué à la voie bleue, non représentée sur la figure, résulte de la combinaison du signal de correction de contours issu de la voie verte fourni par le circuit de traitement des contours 30, et du signal de correction des contours issu de la voie rouge fourni par le circuit de traitement des contours 130. Des interrupteurs 90 et 190 sont respectivement disposés entre les sorties des circuits de traitement 30 et 130 et les entrées du circuit de combinaison 100 et commandés à partir du pupitre pour supprimer ou au contraire introduire les signaux de correction de contours dans l'image.

Le circuit de validation 170 est tel que le signal de contours $C_R$ est transmis seulement lorsque son niveau est bien supérieur au signal de la voie verte, typiquement lorsque $R_F$ est supérieur à $kV_F$, k étant compris entre 2 et 3. Le signal de contours rouge est donc transmis pour les détails à dominance rouge. Par contre, pour les détails noirs et blancs, pour lesquels le signal de la voie verte a la même amplitude que le signal de la voie rouge, le signal de contours rouge $C_R$ n'est pas validé, et le signal de contours provient uniquement de la voie verte. La valeur du coefficient k est choisie pour que le signal de correction de contours issu de la voie rouge ne soit pas utilisé pour les teintes chair qui sont souvent trop détaillées et pour lesquelles il faut éviter d'accentuer les contours. La figure 2, montre dans le triangle des couleurs, la zone des points pour lesquels le signal de contour rouge est efficace dans la zone rouge. Cette zone est la zone déterminée par l'inéquation $R_F - kV_F$ positif.

En réalité, pour s'affranchir du bruit, la validation est obtenue par amplification du signal $R_F - 3V_F$ et limitation de ce signal à un niveau correspondant à 15% de $R_F$. Ainsi, le signal de validation permet également d'éliminer le bruit sur les plages sombres.

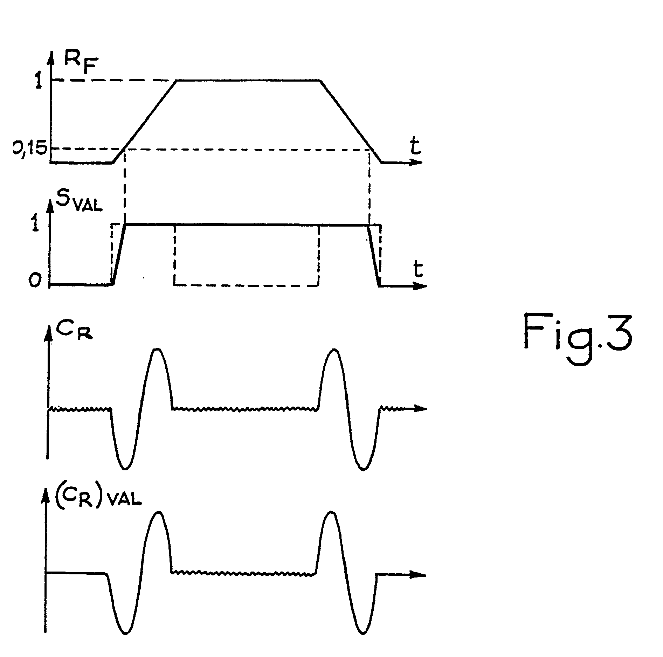

La figure 3 représente le chronogramme des signaux dans un cas particulier où l'on a une transition noire rouge, le niveau du signal R passant de 0 à 1, puis de 1 à 0 en fonction du temps. Le signal vert $V_{IN}$ étant supposé inexistant, le signal de validation $S_{VAL}$ passe à 1 dès que le signal rouge filtré dépasse 15% d'une valeur nominale prédéterminée. Ce signal de validation est le signal représenté en traits pleins sur la figure 3. Le signal de contours rouge correspondant, $C_R$, est également représenté sur la figure 3. On y a montré le bruit présent sur les plages uniformes, tant sur les plages sombres correspondant à $R_F = 0$ que sur les plages rouges correspondant à $R_F = 1$. Dans ce cas, le signal de contours rouge est validé sur toute la plage de rouge, le bruit étant éliminé dans les plages sombres du fait de la forme du signal de validation. Par contre le bruit est maintenu sur les plages uniformes rouges mais peut être éliminé dans le circuit de traitement 130.

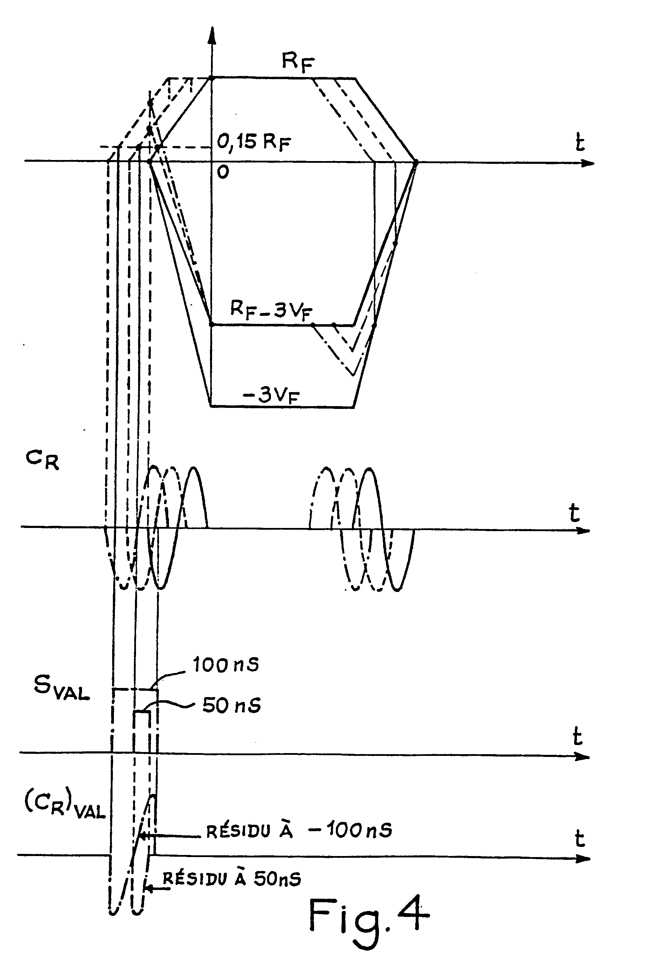

Pour éliminer également le bruit sur les plages uniformes rouges, il est possible de mettre en oeuvre une validation d'un autre type, où le signal de validation $S_{VAL}$ ne reste à 1 que durant les transitions. Dans ce cas, le signal de validation a la forme indiquée en pointillés sur la figure 3 et le bruit est éliminé sur les plages uniformes rouges. Un tel signal de validation peut être obtenu à partir de la valeur absolue de la différence des signaux d'entrée et de sortie du filtre 10. Cependant le circuit de validation est plus complexe que le circuit de validation décrit précédemment et occasionne un dédoublement du contour en cas de déconvergence. La figure 4 représente le chronogramme des signaux dans le cas de transitions pour lesquelles $R_F - 3V_F$ est négatif. Dans ce cas le signal de validation est toujours nul et le signal de contours rouge n'est jamais validé. Cependant, dans le cas d'une déconvergence, le signal de contour rouge peut être validé pendant de petits intervalles de temps, comme le montre la figure 4. Cette figure 4 correspond à une transition noir-blanc c'est-à-dire $R_{IN} = V_{IN}$ soit $R_F = V_F$. Sur le premier chronogramme ont été représentées les signaux $R_F$, $-3V_F$, et $R_F - 3V_F$. Le trait plein représente le cas où il n'y a pas de déconvergence en ligne. Dans ce cas le signal de contours rouge est celui représenté en traits pleins sur le deuxième chronogramme, $C_R$, et le signal de validation $S_{VAL}$ est toujours nul. Le signal de contour rouge n'est donc jamais validé. Le trait en pointillé représente le cas où existe une déconvergence de $-50$ nanosecondes entre le tube analyseur vert et le tube analyseur rouge. Dans ce cas la composante $R_F - 3V_F$ est supérieure à $0,15 R_F$ pendant un petit intervalle de temps et une courte impulsion de validation apparaît alors. Le signal de contour est donc validé pendant un petit intervalle de temps correspondant à cette impulsion, ce qui donne un résidu à $-50$ nanosecondes. De la même manière, pour une déconvergence de $-100$ nanosecondes entre le tube analyseur vert et le tube analyseur rouge, le signal de contour rouge est décalé par rapport au signal de contour vert, et le signal de contour rouge est validé pendant un intervalle de temps correspondant à un signal de validation $S_{VAL} = 1$ associé au dépassement de $R_F - 3V_F$ au-dessus de la limite fixée à $0,15 R_F$. Le résidu à $-100$ nanosecondes est alors un peu plus important. Par contre, sur le front arrière du contour, la décorrélation est totale. Comme le montre la figure 4, on constate une bonne efficacité du système de corrélation $R_F - 3V_F$ supérieur à $0,15 R_F$ pour une déconvergence qui ne dépasse pas 50 nanosecondes en plus ou en moins ; très peu de contour rouge étant alors superposé au détail noir et blanc, la même efficacité est obtenue pour une déconvergence de plus ou moins une ligne en trame. En conséquence, le système de correction de contours mettant en oeuvre pour l'introduction d'une correction de contour rouge une corrélation entre les composantes rouge et verte par une formule du type R–kV positif, permet d'accentuer les contours séparément sur les composantes verte et rouge. Le bruit peut être limité par traitement séparé des deux composantes. Mais, bien entendu ce dispositif de correction nécessite un peu plus de composants électroniques qu'avec une seule extraction de contour de la voie verte, où qu'avec un matriçage entre les voies verte et rouge avant extraction des contours. Ce dosage séparé des contours rouge et vert permet cependant d'améliorer considérablement l'aspect de certaines images notamment celles à dominance rouge.

Le dispositif de correction selon l'invention n'est pas limité au traitement des signaux rouge et vert mais peut s'appliquer également au traitement des signaux rouge, vert et bleu.

## Revendications

1. Dispositif de correction de contours des signaux de chrominance issus des tubes analyseurs d'une caméra de télévision couleur, comportant dans la voie verte un circuit d'extraction de signaux des contours (20) caractéristiques des transitions dans le signal vert, un circuit de traitement de contours (30) relié au circuit d'extraction (20), et deux additionneurs de sortie (60, 160) respectivement dans chacune des voies de chrominance, couplés d'une part aux entrées des voies de chrominance correspondantes et d'autre part à une sortie de signal de correction de contours finale du dispositif, caractérisé en ce qu'il comporte en outre dans la voie rouge un circuit d'extraction de signaux des contours (120) caractéristiques de transitions dans le signal de chrominance rouge, un circuit de validation (170, 180) recevant les signaux de chrominance vert et rouge et le signal de contour rouge $C_R$ et fournissant un signal de contour rouge validé lorsque le niveau du signal de chrominance rouge est nettement plus élevé que le niveau du signal de chrominance vert, et un autre circuit de traitement des contours (130) relié à la sortie du circuit de validation (170), le dispositif de correction comportant en outre un circuit de mélange (100) relié aux sorties des deux circuits de traitement des contours fournissant le signal de correction de contours final aux additionneurs de sortie.

2. Dispositif selon la revendication 1, caractérisé en ce que les circuits d'extraction de signaux des contours (20, 120) génèrent les signaux de contours par différence entre le signaux de chrominance respectivement vert et rouge issus des tubes analyseurs et ces mêmes signaux filtrés par des filtres (10, 110).

3. Dispositif selon la revendication 2, caractérisé en ce que le circuit de validation (170) valide le signal de contour rouge lorsque le niveau du signal de chrominance filtré de la voie rouge, $R_F$, est supérieur à $kV_F$, $V_F$ étant le niveau du signal de chrominance filtré de la voie verte, k étant supérieur à 1 et de préférence compris entre 2 et 3.

4. Dispositif selon la revendication 1, caractérisé en ce que le signal de contour rouge n'est validé, lorsque le niveau du signal de chrominance rouge est nettement plus élevé que celui du signal vert, que pendant les transitions du signal de chrominance rouge.

5. Dispositif selon l'une quelconque des revendications précédentes, caractérisé en ce que les circuits de traitement des contours verts (30) et des contours rouges (130) comportent des moyens de réglage indépendants.

6. Utilisation d'un dispositif de correction de contours selon l'une quelconque des revendications précédentes dans une caméra de télévision couleur pour renforcer les détails de l'image dans les zones à dominante rouge.

## Ansprüche

1. Einrichtung zum Korrigieren der Umrisse von Farbsignalen, die von Aufnahmeröhren einer Farbfernsehkamera geliefert werden, mit einer Schaltung (20) im Grünkanal zur Entnahme der für die Übergänge im Grünsignal charakteristischen Umrißsignale, mit einer an die Entnahmeschaltung (20) angeschlossenen Umrißbehandlungsschaltung (30) und zwei Ausgangsaddierern (60, 160) in je jedem der Farbkanäle, wobei die Addierer zum einen an die Eingänge der entsprechenden Farbkanäle, und zum anderen an einen Ausgang der Einrichtung für das endgütige Umrißkorrektursignal angeschlossen sind, dadurch gekennzeichnet, daß die Einrichtung weiter im Rotkanal eine Schaltung (120) zur Entnahme der für die Übergänge im roten Farbsignal charakteristischen Umrißsignale, eine Freigabeschaltung (170, 180), die die Farbsignale Grün und Rot und das rote Umrißsignal $C_R$ empfängt und ein rotes Umrißsignal liefert, das freigegeben wird, wenn der Pegel des roten Farbsignals deutlich höher als der Pegel des grünen Farbsignals ist, und eine weitere Umrißbehandlungsschaltung (130) aufweist, die an den Ausgang der Freigabeschaltung (170) angeschlossen ist, wobei die Korrektureinrichtung weiter einen Mischkreis (100) aufweist, der an die Ausgänge der beiden Umrißbehandlungsschaltungen angeschlossen ist, die das endgültige Umrißkorrektursignal an die Ausgangaddierer liefern.

2. Einrichtung nach Anspruch 1, dadurch gekennzeichnet, daß die Umrißsignalentnahmeschaltungen (20, 120) die Umrißsignale durch Differenzbildung zwischen den von den Aufnahmeröhren gelieferten jeweiligen Farbsignalen Grün und Rot und denselben von Filtern (10, 110) gefilterten Signalen erzeugen.

3. Einrichtung nach Anspruch 2, dadurch gekennzeichnet, daß die Freigabeschaltung (170) das rote Umrißsignal freigibt, wenn der Pegel des gefilterten Farbsignals des Rotkanals $R_F$ höher als $kV_F$ ist, wobei $V_F$ der Pegel des gefilterten Farbsignals des Grünkanals und k größer als 1, vorzugsweise zwischen 2 und 3 ist.

4. Einrichtung nach Anspruch 1, dadurch gekennzeichnet, daß das rote Umrißsignal nur während der Übergänge des roten Farbsignals freigegeben wird, wenn der Pegel des roten Farbsignals deutlich höher als derjenige des Grünsignals ist.

5. Einrichtung nach einem beliebigen der vorhergehenden Ansprüche, dadurch gekennzeichnet, daß die Behandlungsschaltungen der grünen (30) und der roten Umrisse (130) unabhängige Regelmittel aufweisen.

6. Verwendung einer Umrißkorrektureinrichtung nach einem beliebigen der vorhergehenden Ansprüche in einer Farbfernsehkamera zur stärkeren Heraushebung der Bildeinzelheiten in den Zonen mit Rotdominanz.

## Claims

1. A device for correcting the contours of the chrominance signals issuing from the analysing tubes of a colour television camera, comprising in the green channel a circuit (20) for extracting contour signals which are characteristic for the transitions occuring in the green signal, a contours processing circuit (30) connected to the extraction circuit (20), and two output adders (60, 160) placed respectively in each of the chrominance channels and coupled on the one hand to the inputs of the corresponding chrominance channels, and on the other hand to an output for the final contours correction signal of the device, characterized in that the device further comprises in the red channel a circuit (120) for extracting contour signals which are characteristic for the transitions occuring in the red chrominance signal, an enabling circuit (170, 180) adapted to receive the green and red chrominance signals and the red contour signal $C_R$, and delivering an enabled red contour signal, when the level of the red chrominance signal is significantly higher than the level of the green chrominance signal, and another contours processing circuit (130) connected to the output of the enabling circuit (170), the correcting device further comprising a mixing circuit (100) connected to the outputs of the two contours processing circuits delivering the final contours correcting signal to the output adders.

2. A device according to claim 1, characterized in that the contours signal extracting circuits (20, 120) generate the contour signals by way of forming the difference between the respective chrominance signals green and red issuing from the analysing tubes and these same signals after having been filtered by filters (10, 110).

3. A device according to claim 2, characterized in that the enabling circuit (170) enables the red contour signal, when the level of the filtered chrominance signal of the red channel, $R_F$, is higher than $k.V_F$, with $V_F$ being the level of the filtered chrominance signal of the green channel, and k being greater than 1, preferably comprised between 2 and 3.

4. A device according to claim 1, characterized in that the red contour signal is only enabled during the transitions of the red chrominance signal when the level of the red chrominance signal is significantly higher than the level of the green signal.

5. A device according to any one of the preceding claims, characterized in that the circuits for processing the green contours (30) and of the red contours (130) include independent adjusting means.

6. The use of a contours correcting device according to any one of the preceding claims in a colour television camera in order to reinforce the details of the images in the areas of red dominance.

Fig.1

Fig.2

TEINTE CHAIR

BLANC

$R_F - kV_F > 0$

Fig.3

Fig.4